# EUROPEAN PATENT SPECIFICATION

(11) **EP 3 821 204 B1**
(45) Date of publication and mention of the grant of the patent: **02.09.2026**
(21) Application number: 19739983.5
(22) Date of filing: 12.07.2019
(51) Int. Cl.: G01C 11/02, G01C 15/00

(54) **METHOD FOR DETERMINING THE POSITION OF MEASUREMENT POINTS IN A PHYSICAL ENVIRONMENT**
VERFAHREN ZUR POSITIONSBESTIMMUNG VON MESSPUNKTEN IN EINER PHYSIKALISCHEN UMGEBUNG
PROCÉDÉ DE DÉTERMINATION DE LA POSITION DE POINTS DE MESURE DANS UN ENVIRONNEMENT PHYSIQUE

(30) Priority: 13.07.2018 DE 102018211719
(43) Date of publication of application: 19.05.2021
(73) Proprietor: TK Home Solutions B.V., 2921 LN Krimpen aan den IJssel (NL)
(72) Inventor: DELOBELLE, inge, 45133 Essen (DE); REUTER, Marc, 42655 Solingen (DE); FEISMANN, Simon, 45219 Essen (DE); MODASER SABA, Isaak, 71672 Marbach (DE)
(74) Representative: Nißl, Alexandra
(86) International application number: PCT/EP2019/068819
(87) International publication number: WO 2020/011978

(56) References cited:
- WO-A1-2017/134886
- US-A1- 2003 014 212
- US-A1- 2013 282 345
- US-A1- 2016 292 927
- US-A1- 2017 277 180

## Description

The present invention refers to a method for determining the position of measurement points in a physical environment, using a mixed reality smartglass having a measurement application. The mixed reality smartglass is worn by a surveyor performing the measurement. In the method, the physical environment is scanned and a number of pictures from the environment comprising a measurement point are taken to determine the position of the measurement point.

Methods for determining the position of measurement points in a physical environment using a mixed reality smartglass having a measurement application are known in the prior art. Usually, tracking systems of mixed reality smartglasses use cameras and various sensors to identify features in the environment in visible light. The system triangulates its position based on the observed features, and supplements this information by fusing high rate data from the inertial measurement unit to produce a continuous position estimation for the head mounted display in the environment. The position information is used by both applications to render a scene and by the system to correct this rendering for any mis-prediction in time and position. Information on the environment is stored so that the tracking system can recall environment specific data such as the physical location of objects.

By use of this position information, smart glass applications define holograms comprising presentations of objects and features of the current environment of the smartglass and display them to the user wearing the head mounted display. This involves positioning and orienting those holograms in the environment. For this purpose, spatial coordinate systems, for example based on Cartesian coordinates are used in which the recorded geometry is defined. As the device repeatedly scans the environment to determine a more and more precise model of position information, these virtual spatial anchors can adjust their position relative to one another as needed to ensure that a virtual anchor stays where it was placed relative to the environment. However, in particular for applications with physical dimensions of more than five meters, holograms in stationary coordinate systems may experience drift when the user is far from the origin of the coordinate system. This results in dimensional deviations in measurement applications for example already in apartments where an accuracy of about 1.00 % is desirable.

From US 2016/292927 A1 methods and systems for providing an augmented reality image are known which combine a real-time, real view of an external element in a real environment, overlaid with an image of a 3D digital model of internal elements. The method uses AR technology and 3D laser scanning for digital modelling processes. From US 2017/277180 A1 an unmanned surveyor is known including a vehicle for moving within an environment and a camera for capturing video or images of the environment The surveyor identifies points within the environment and positions of those points for calculating spatial dimensions of virtual lines and/ or shapes. Measures or procedures for increasing the accuracy of measurements are not known from these documents.

From US 2013/282345 A1 a system for generating and updating a 3D model of a building or nonbuilding structure is known. Each construction element may be associated with physical location information that may be analysed over time in order to detect movement of the construction element. From WO 2017/134886 A1 an information processing method is known where an image is captured by an imaging section and a position information is acquired based on at least any of a position and a direction of the imaging section. By means of a processor a first position and a second position in a real space is estimated.

Therefore, it is an object of this invention to provide an improved method for determining the position of measurement points in a physical environment using a mixed reality smartglass which results in a higher accuracy of measurement applications.

An improved method for determining the position of measurement points in a physical environment using a mixed reality smartglass having a measurement application is achieved by the solution of the independent claim. Further developments of the invention are provided by the subject matter of the dependent claims.

The invention proposes a method for determining the position of measurement points in a physical environment, using a mixed reality smartglass having a measurement application. The mixed reality smartglass is worn by a surveyor performing the measurement.

The method comprises the following steps:
a) Placing a virtual spatial anchor point on a predetermined position in the physical environment;
b) Scanning the physical environment using the mixed reality smartglass;
c) Checking the result of step b) if there is a need for at least one marker to be placed in the environment and placing at least one marker in the environment according to the need;
d) Taking at least a predetermined number of pictures from the environment comprising one measurement point;
e) Determining the position of the measurement point relative to the virtual spatial anchor point in each picture;
f) Calculating the average position of the measurement point from the pictures; if the determined position values of the measurement point in the pictures are within a predetermined tolerance range, the calculated average position is the determined position of the measurement point; and
g) Repeating steps d) to f) for each of the measurement points,
wherein, if the quality of the data recorded during the scanning does not correspond to a minimum quality required to determine positions in the recorded data, the surveyor receives a signal indicating that there is a need to place at least one marker in the physical environment.

With performing the proposed method to determine the position of measurement points in a physical environment, the accuracy of determined positions is higher than only with using one of the provided measurement applications of smartglasses as such. In particular, the accuracy of determined positions is improved in that each determined position is calculated from the average position of the measurement point from more than one picture, and an additional check if the determined position values taken from each picture are within a predetermined tolerance.

The invention proposes a method for determining the position of measurement points in a physical environment inside or outside of buildings. The method is in particular applicable for surveying complex building structures as for examples stairs or staircases. The method is proposed for carrying out surveying work using mixed reality smartglasses having a measurement application. The mixed reality smartglass is worn by the surveyor performing the measurement work on site.

In a first step of the method at least one a virtual spatial anchor point is placed on a predetermined position in the physical environment. The virtual spatial anchor point defines the origin of the coordinate system which serves as reference for all position data of objects having a certain distance in the physical environment. For distances higher than this specific distance all points will be referred to the second; third anchor point. The predetermined position on which the virtual spatial anchor point is placed may be any position in the physical environment, in particular a position at a special feature of an object as for example a corner of a building or a room in a building or the corner of the first step in a staircase.

In a further step, the physical environment to be measured is scanned by the smartglass having the measurement application. During the scanning process, the surveyor traverses the environment to be recorded in particular slowly orienting the smartglass in all directions of interest. For achieving a good result, the environment should be scanned at least twice. For example when using the proposed method for surveying a staircase, the surveyor goes up and down the stairs at least twice. The smartglass application will usually continue to scan the environment during the whole measurement process, but double scanning the environment in the beginning is regularly sufficient for achieving an initial accuracy of the resulting data.

After the initial scanning is done in step b), in step c) the result of step b) is checked for assessing the quality of the determined data. The quality of the determined data depends inter alia on the lighting conditions in the physical environment and on the contrast of objects regarding for example differing colours, clear-cut edges, corners or surfaces. According to the quality of the data recorded during the initial scanning, the measurement application determines if there is a need for at least one marker to be placed in the environment. If the quality of the data does not correspond to a minimum quality required to determine positions in the recorded data, the surveyor receives a signal indicating that there is a need to place markers in the physical environment.

For signaling the need for markers, the application displays to the surveyor for example a certain value related to the quality recorded. If the value is above a certain threshold value, no markers have to be placed into the environment. If the value is below a certain threshold value, markers have to be placed into the environment, and in particular the more markers are required, the bigger the given value is. According to the need, at least one marker has to be placed in the environment. Any object can serve as marker, if it is suitable to enhance the contrast and orientation for the measurement application, as for example a sheet of paper or clearly visible and trackable 2- or 3-dimensional objects. As the scanning continues during placing the markers into the environment, the next step of the method can follow.

After the initial scan is done resulting in recorded data having sufficient quality, the surveyor takes at least a predetermined number of pictures from the environment comprising one measurement point. The predetermined number of pictures varies in particular from the position of the measurement point and is indicated to the surveyor. For example, between two and four pictures will have to be taken for one measurement point. Ideally, the perspective of each picture varies to a certain degree for recording better measurement data.

The term "taking a picture" has its origin in the language used by measurement applications for smartglasses in the prior art. Similarly to this known methods, in the proposed method no literal picture in terms of an image is captured for performing image processing. The term "taking a picture" stands for starting a measurement procedure, where the coordinate values of the measurement point are picked from the recorded (and continuously updated) data of the scanned environment of the smartglass application. As the term "taking a picture" is established as technical term in such measurement applications it is also used for the description of the present invention. With "taking a picture" the detail of the environment in the current perspective of the surveyor is recorded from the measurement application, for determining the position of a point included in the perspective.

In the next step, the measurement application determines the position of the measurement point relative to the virtual spatial anchor point in each picture. In this step, the position values of the measurement point are determined in relation to the coordinate system originating at the virtual anchor point. In fact, for determining the position of a measurement point no actual measurement procedure is performed. Rather, the measurement application extracts the position values of the measurement point from the scanned and recorded environment data.

Thereupon the average position of the measurement point is calculated from the pictures. If the determined position values of the measurement point in the pictures taken in the preceding step are within a predetermined tolerance range, the calculated average position is the final determined position of the measurement point. If the position values of the measurement point in the pictures taken differ to a greater extent than the tolerance range permits, step d) to f) have to be repeated for this measurement point and the surveyor has to take the predetermined number of pictures again.

For each of the measurement points which position needs to be determined, the procedure of steps d) to f) is repeated. Thus, for each of the measurement points the previously indicated steps are repeated: Taking a predetermined number of pictures, the determination of the position values of the measurement point in each picture and calculating of the average position of each of the measurement points including the check, if the determined position values are within a predetermined tolerance range.

In one embodiment of the method, also step b), scanning the physical environment and step c), checking the result of step b) if there is a need for at least one (additional) marker to be placed in the environment and placing at least one marker in the environment according to the need are repeated for at least one further measurement point. In performing the method according to this extended procedure, a further enhanced accuracy of the measurement application is achievable.

In a further embodiment of the method, a tolerance sphere is created around the virtual spatial anchor point at the predetermined position. The dimensions of the tolerance sphere are specified in particular according to the dimensions of the measurement environment and to the required accuracy of the measurement results. During the method a possible drift of the virtual spatial anchor point is monitored with regard to the tolerance sphere. Such drifting may be caused by position adjustments of the 3D-application.

If the virtual spatial anchor point has drifted out of the tolerance sphere, the measurement application will suspend further measurement steps. In case the method would continue with determining the position of measurement points while the virtual special anchor point is outside of the tolerance sphere, the determined positions would deviate in relation to previously determined positions of measurement points.

In a further embodiment of the method, if the virtual spatial anchor point has drifted more than within the tolerance sphere, a calculation step is performed for transferring the virtual spatial anchor point back into the tolerance sphere and for recalculating the position of the virtual anchor point to the initial anchor point related to the physical environment.

The monitoring and recalculating of the position of the virtual spatial anchor point prevents that the position of a measurement point is determined based on the virtual spatial anchor point, while it drifted more than within a tolerance range. In such a case, the determined position would deviate from the determined positions of measurement points related to the virtual spatial anchor point arranged within the tolerance sphere. With the proposed method step, the positions of all determined measurement points are related to a virtual spatial anchor whose position is within a predetermined tolerance range related to the physical environment.

In a further embodiment of the method, if the virtual spatial anchor point has drifted more than within the tolerance sphere, the performing of steps d) to g) is suspended. This provision prevents to determine the position of measurement points basically based on the same virtual spatial anchor point, while the positions are determined before and after the virtual anchor point has drifted more than within a tolerance range. With the proposed method, the positions of the determined measurement points are related to one virtual spatial anchor whose position is within a predetermined tolerance range.

In a further embodiment of the method, in step d) the measuring point is indicated with an indicator tool. If there is more than one physical point that could serve as the point which position has to be determined in the current perspective of the surveyor, the measurement application requires the information for which point the position has to be determined. One option is to indicate the point of interest with an indicator tool that clearly indicates the point to the application. For this purpose, for example a hand guided pointer may be used as indicator tool, where an arrow or a specific pattern may be arranged to indicate precisely the point to be measured in the physical environment. As an alternative, for example patterns or pointers may be fixedly positioned in the physical environment to define the points to be measured to the application.

In a further embodiment, the method comprises the further step h) where a distance is calculated between the virtual spatial anchor point and the determined position of a measurement point or between the determined positions of at least two measurement points. With this additional step, the method also serves to extract distances between the previously determined positions of measurement points or also distances between the virtual spatial anchor point and the previously determined position of a measurement point.

In a further embodiment, the method comprises the further step i) where the angle between two intersecting lines is calculated. In particular, each line extends between the positions of at least two points, wherein each point is a determined position of a measurement point or the virtual spatial anchor point. With this additional step, the method also serves in particular to extract angels between lines extending between the virtual spatial anchor point and previously determined positions of measurement points or between at least two previously determined positions of measurement points.

In a further embodiment, the method comprises the further step k) where the volume of a space is calculated which is defined by the positions of at least three points, wherein each point is a determined position of a measurement point and/ or the virtual spatial anchor point. With this additional step, the method also serves in particular to calculate volumes in the physical environment, defined by the positions of at least three points comprising the previously determined positions of measurement points and/ or the virtual spatial anchor point.

Further advantages, features and possible applications of the present invention will be described in the following in conjunction with the figures.

Shown are in:
Fig. 1: a schematic representation of a surveyor performing an embodiment of the inventive method; and
Fig. 2: a flow chart of the inventive method.

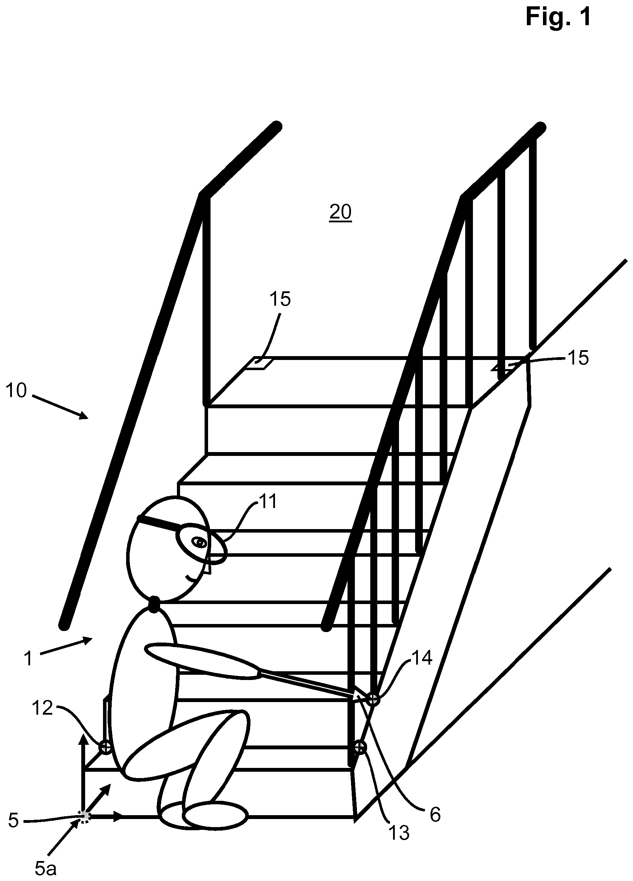

Fig. 1 shows a schematic representation of a surveyor 1 performing an embodiment of the inventive method within a staircase 10 of a building. The method serves for determining the position of measurement points 12 to 14 in a physical environment 20, using a mixed reality smartglass 11 having a measurement application, wherein the mixed reality smartglass 11 is worn by a surveyor 1 performing the measurement. When performing the method, the following steps are carried out by the surveyor 1 working with the smartglass measurement application:
a) A virtual spatial anchor point 5 is placed a on a predetermined position in the physical environment. For performing this step, the surveyor indicates to the measurement application where in the physical environment 20 the spatial anchor point is to be placed.
b) The physical environment is scanned by the smartglass application. During the scanning the surveyor 1 moves in the physical environment 20 and directs the smartglass 11 to all details of interest.
c) The smartglass application checks the result of step b) if there is a need for at least one marker 15 to be placed in the environment 20. As a need for additional markers 15 has been displayed to the surveyor 1 in the exemplary procedure, the surveyor 1 placed two additional marker 15 at the top of the last stair.

As the data of the environment scan has been sufficient after the markers 15 have been placed in the environment 20, the next steps of the method can follow.
d) The surveyor 1 takes a predetermined number of pictures from the environment 20 comprising one measurement point 12 to 14. During the pictures are taken, the surveyor 1 indicates the measurement point 14 via an indicator tool 6 in form of a pointer. During this step, the measurement application displays via the smartglass 11 to the surveyor 1, that three pictures have to be taken for determining the position of the measurement point 14 with regard to the virtual spatial anchor point 5.
e) Following this, the position of the measurement point 14 is determined relative to the virtual spatial anchor point 5 in each picture.
f) After that, the average position of the measurement point 14 is calculated from the pictures. If the determined position values of the measurement point 14 in the pictures are within a predetermined tolerance range, the calculated average position is the determined position of the measurement point 14.
g) Steps d) to f) are repeated for each of the measurement points 12 to 14.

Fig. 1 also shows schematically the tolerance sphere 5a which is created around the virtual spatial anchor point 5 and a further measurement points 12 and 13, which positions have already been determined by use of the specified method.

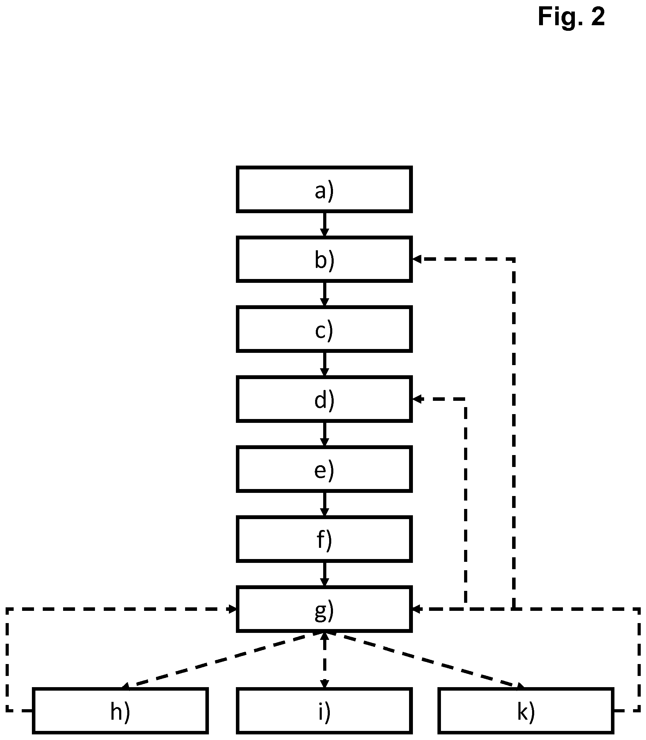

Fig. 2 shows a flow chart of the inventive method. The steps of the inventive method are performed as specified in the description of the invention and also as specified with regard to Fig. 1. As can be seen in Fig. 2, after step g), optionally either steps d) to f) or steps b) to f) are repeated for determining the position of a number of measurement points 12 to 14. After the position of all measurement points 11 to 14 is determined, optionally, at least one of steps h) to k) is performed to determine at least one distance, angle or volume in the physical environment 20.

### Reference Signs

- 1: surveyor
- 5: virtual spatial anchor point
- 5a: tolerance sphere
- 6: indicator tool
- 10: staircase
- 11: smartglass
- 12: measurement point/ determined position of a measurement point
- 13: measurement point/ determined position of a measurement point
- 14: measurement point/ determined position of a measurement point
- 15: marker
- 20: physical environment

## Claims

1. Method for determining the position of measurement points (12, 13, 14) in a physical environment (20), using a mixed reality smartglass (11) having a measurement application, wherein the mixed reality smartglass (11) is worn by a surveyor (1) performing the measurement, the method comprises the following steps:
a) Placing a virtual spatial anchor point (5) on a predetermined position in the physical environment (20);
b) Scanning the physical environment (20) using the mixed reality smartglass;
c) Checking the result of step b) if there is a need for at least one marker (15) to be placed in the environment (20) and placing at least one marker (15) in the environment (20) according to the need;
d) Taking at least a predetermined number of pictures from the environment (20) comprising one measurement point (12, 13, 14);
e) Determining the position of the measurement point (12, 13, 14) relative to the virtual spatial anchor point (5) in each picture;
f) Calculating the average position of the measurement point (12, 13, 14) from the pictures; if the determined position values of the measurement point (12, 13, 14) in the pictures are within a predetermined tolerance range, the calculated average position is the determined position of the measurement point (12, 13, 14); and
g) Repeating steps d) to f) for each of the measurement points (12, 13, 14),
wherein, if the quality of the data recorded during the scanning does not correspond to a minimum quality required to determine positions in the recorded data, the surveyor (1) receives a signal indicating that there is a need to place at least one marker (15) in the physical environment (20).

2. Method according to claim 1, **characterized in that** for at least one further measurement point (12, 13, 14) steps b) to f) are repeated.

3. Method according to at least one of the preceding claims, **characterized in that** a tolerance sphere (5a) is created around the virtual spatial anchor point (5) at the predetermined position and during the method a possible drift of the virtual spatial anchor point (5) is monitored with regard to the tolerance sphere.

4. Method according to claim 3, **characterized in that** if the virtual spatial anchor point (5) drifts more than within the tolerance sphere (5a), a calculation step is performed for transferring the virtual spatial anchor point (5) back into the tolerance sphere (5a).

5. Method according to claim 3 or 4, **characterized in that** if the virtual spatial anchor point (5) drifts more than within the tolerance sphere (5a), the performing of steps d) to g) is suspended.

6. Method according to at least one of the preceding claims, **characterized in that** in step d) the measuring point (11) is indicated with an indicator tool (6).

7. Method according to at least one of the preceding claims, **characterized in** the further step:
h) Calculating the distance between the virtual spatial anchor point (5) and the determined position of the measurement point (12, 13, 14) or between the determined positions of at least two measurement points (12, 13, 14).

8. Method according to at least one of the preceding claims, **characterized in** the further step:
i) Calculating the angle between two intersecting lines each extending between the determined positions of at least two points, wherein each point is one of the virtual spatial anchor point (5) or a measurement point (12, 13, 14).

9. Method according to at least one of the preceding claims, **characterized in** the further step:
k) Calculating the volume of a space defined by the determined positions of at least three points, wherein each point is a measurement point (12, 13, 14) and/ or the virtual spatial anchor point (5).

## Patentansprüche

1. Verfahren zum Bestimmen der Position von Messpunkten (12, 13, 14) in einer physischen Umgebung (20) unter Verwendung eines Mixed-Reality-Smartglasses (11) mit einer Messanwendung, wobei das Mixed-Reality-Smartglass (11) von einem Vermesser (1) getragen wird, der die Messung durchführt, wobei das Verfahren die folgenden Schritte aufweist:
a) Platzieren eines virtuellen räumlichen Ankerpunkts (5) an einer vorgegebenen Position in der physischen Umgebung (20);
b) Scannen der physischen Umgebung (20) unter Verwendung des Mixed-Reality-Smartglasses;
c) Prüfen des Ergebnisses von Schritt b), ob ein Bedarf besteht, mindestens einen Marker (15) in der Umgebung (20) zu platzieren, und Platzieren mindestens eines Markers (15) in der Umgebung (20) entsprechend dem Bedarf;
d) Aufnehmen von mindestens einer vorgegebenen Anzahl von Bildern der Umgebung (20), die jeweils einen Messpunkt (12, 13, 14) enthalten;
e) Bestimmen der Position des Messpunkts (12, 13, 14) relativ zum virtuellen räumlichen Ankerpunkt (5) in jedem Bild;
f) Berechnen der durchschnittlichen Position des Messpunkts (12, 13, 14) aus den Bildern; liegen die ermittelten Positionswerte des Messpunkts (12, 13, 14) in den Bildern innerhalb eines vorgegebenen Toleranzbereichs, so ist die berechnete durchschnittliche Position die bestimmte Position des Messpunkts (12, 13, 14); und
g) Wiederholen der Schritte d) bis f) für jeden der Messpunkte (12, 13, 14),
wobei, falls die Qualität der während des Scannens aufgezeichneten Daten nicht der für die Positionsbestimmung in den aufgezeichneten Daten erforderlichen Mindestqualität entspricht, der Vermesser (1) ein Signal empfängt, das anzeigt, dass mindestens eine Markierung (15) in der physischen Umgebung (20) platziert werden muss.

2. Verfahren nach Anspruch 1, **dadurch gekennzeichnet, dass** für mindestens einen weiteren Messpunkt (12, 13, 14) die Schritte b) bis f) wiederholt werden.

3. Verfahren nach wenigstens einem der vorstehenden Ansprüche, **dadurch gekennzeichnet, dass** eine Toleranzsphäre (5a) um den virtuellen räumlichen Ankerpunkt (5) herum an der vorgegebenen Position erzeugt wird und während des Verfahrens eine mögliche Drift des virtuellen räumlichen Ankerpunkts (5) in Bezug auf die Toleranzsphäre überwacht wird.

4. Verfahren nach Anspruch 3, **dadurch gekennzeichnet, dass**, falls der virtuelle räumliche Ankerpunkt (5) weiter als innerhalb der Toleranzsphäre (5a) abdriftet, ein Berechnungsschritt durchgeführt wird, um den virtuellen räumlichen Ankerpunkt (5) wieder in die Toleranzsphäre (5a) zu transferieren.

5. Verfahren nach Anspruch 3 oder 4, **dadurch gekennzeichnet, dass**, wenn der virtuelle räumliche Ankerpunkt (5) weiter als innerhalb der Toleranzsphäre (5a) abdriftet, die Ausführung der Schritte d) bis g) unterbrochen wird.

6. Verfahren nach mindestens einem der vorstehenden Ansprüche, **dadurch gekennzeichnet, dass** in Schritt d) der Messpunkt mit einem Anzeigewerkzeug (6) angezeigt wird.

7. Verfahren nach mindestens einem der vorstehenden Ansprüche, **gekennzeichnet durch** den weiteren Schritt:
h) Berechnen des Abstands zwischen dem virtuellen räumlichen Ankerpunkt (5) und der bestimmten Position des Messpunkts (12, 13, 14) oder zwischen den bestimmten Positionen von mindestens zwei Messpunkten (12, 13, 14).

8. Verfahren nach mindestens einem der vorstehenden Ansprüche, **gekennzeichnet durch** den weiteren Schritt:
i) Berechnen des Winkels zwischen zwei sich schneidenden Geraden, die sich jeweils zwischen den ermittelten Positionen von mindestens zwei Punkten erstrecken, wobei jeder Punkt entweder der virtuelle räumliche Ankerpunkt (5) oder ein Messpunkt (12, 13, 14) ist.

9. Verfahren nach mindestens einem der vorstehenden Ansprüche, **gekennzeichnet durch** den weiteren Schritt:
k) Berechnen des Volumens eines Raums, der durch die bestimmten Positionen von mindestens drei Punkten definiert ist, wobei jeder Punkt ein Messpunkt (12, 13, 14) und/ oder der virtuelle räumliche Ankerpunkt (5) ist.

## Revendications

1. Procédé permettant de déterminer la position de points de mesure (12, 13, 14) dans un environnement physique (20) à l'aide de lunettes intelligentes de réalité mixte (11) équipées d'une application de mesure, lesdites lunettes intelligentes de réalité mixte (11) étant portées par un opérateur (1) exécutant la mesure, le procédé comprenant les étapes suivantes consistant à:
a) placer un point d'ancrage spatial virtuel (5) à une position prédéterminée dans l'environnement physique (20);
b) balayer l'environnement physique (20) à l'aide des lunettes intelligentes de réalité mixte;
c) vérifier le résultat de l'étape b) afin de déterminer s'il est nécessaire de placer au moins un repère (15) dans l'environnement (20), et placer au moins un repère (15) dans l'environnement (20) en fonction de ce besoin;
d) prendre au moins un nombre prédéterminé d'images de l'environnement (20) comprenant un point de mesure (12, 13, 14);
e) déterminer la position du point de mesure (12, 13, 14) par rapport au point d'ancrage spatial virtuel (5) dans chaque image;
f) calculer la position moyenne du point de mesure (12, 13, 14) à partir des images; si les valeurs de position déterminées du point de mesure (12, 13, 14) dans les images se situent dans une plage de tolérance prédéterminée, la position moyenne calculée est la position déterminée du point de mesure (12, 13, 14); et
g) répéter les étapes d) à f) pour chacun des points de mesure (12, 13, 14),
sachant que, si la qualité des données enregistrées pendant le balayage ne correspond pas à la qualité minimale requise pour déterminer les positions dans les données enregistrées, l'opérateur (1) reçoit un signal indiquant qu'il est nécessaire de placer au moins un repère (15) dans l'environnement physique (20).

2. Procédé selon la revendication 1,
**caractérisé en ce que**, pour au moins un autre point de mesure (12, 13, 14), les étapes b) à f) sont répétées.

3. Procédé selon l'une au moins des revendications précédentes,
**caractérisé en ce qu'**une sphère de tolérance (5a) est créée autour du point d'ancrage spatial virtuel (5) à la position prédéterminée et, au cours du procédé, un éventuel décalage du point d'ancrage spatial virtuel (5) est surveillé par rapport à la sphère de tolérance.

4. Procédé selon la revendication 3,
**caractérisé en ce que** si le point d'ancrage spatial virtuel (5) est décalé au-delà de la sphère de tolérance (5a), une étape de calcul est exécutée pour ramener le point d'ancrage spatial virtuel (5) dans la sphère de tolérance (5a).

5. Procédé selon la revendication 3 ou 4,
**caractérisé en ce que**, si le point d'ancrage spatial virtuel (5) est décalé au-delà de la sphère de tolérance (5a), l'exécution des étapes d) à g) est suspendue.

6. Procédé selon l'une au moins des revendications précédentes,
**caractérisé en ce que**, à l'étape d), le point de mesure est indiqué à l'aide d'un outil indicateur (6).

7. Procédé selon l'une au moins des revendications précédentes,
**caractérisé par** l'étape supplémentaire consistant à:
h) calculer la distance entre le point d'ancrage spatial virtuel (5) et la position déterminée du point de mesure (12, 13, 14) ou entre les positions déterminées d'au moins deux points de mesure (12, 13, 14).

8. Procédé selon l'une au moins des revendications précédentes, **caractérisé par** l'étape supplémentaire consistant à:
i) calculer l'angle entre deux lignes sécantes s'étendant chacune entre les positions déterminées d'au moins deux points, chaque point étant soit le point d'ancrage spatial virtuel (5), soit un point de mesure (12, 13, 14).

9. Procédé selon l'une au moins des revendications précédentes, **caractérisé par** l'étape supplémentaire consistant à:
k) calculer le volume d'un espace défini par les positions déterminées d'au moins trois points, chaque point étant un point de mesure (12, 13, 14) et/ou le point d'ancrage spatial virtuel (5).
